# EUROPÄISCHE PATENTANMELDUNG

(11) **EP 2 060 602 A1**
(43) Veröffentlichungstag der Anmeldung: **20.05.2009**
(21) Anmeldenummer: 08015372.9
(22) Anmeldetag: 01.09.2008
(51) Int. Cl.: C08K 13/02, C08K 13/04, C08K 3/00, C08K 3/04, C08K 3/34, C08K 5/098, C08K 7/02

(54) **Flammwidrige Intumeszenzmasse sowie deren Verwendung**

(30) Priorität: 19.11.2007 DE 102007055374
(71) Anmelder: Rodenberg, Volker, 56291 Leiningen (DE)
(72) Erfinder: Rodenberg, Volker, 56291 Leiningen (DE)
(74) Vertreter: Gesthuysen, von Rohr & Eggert

(57) **Zusammenfassung**

Die Erfindung betrifft ein flamm- und/oder brandbeständiges, wärmeexpandierbares organisch-anorganisch basiertes Hybridmaterial, insbesondere eine Intumeszenzmasse, welches (A) mindestens ein wärmeexpandierbares Intumeszenzmittel, (B) mindestens ein Kunststoffmaterial und/oder dessen Vorläufer sowie (C) eine Mischung auf Basis mindestens eines Aluminiumsilikates und/oder Alumosilikates einerseits und mindestens eines Salzes anderseits enthält, sowie dessen Verwendung.

## Beschreibung

Die vorliegende Erfindung betrifft eine flammwidrige Intumeszenzmasse sowie deren Verwendung.

Insbesondere betrifft die vorliegende Erfindung ein flamm- und/oder brandbeständiges, wärmeexpandierbares organisch-anorganisch basiertes Hybridmaterial, insbesondere eine Intumeszenzmasse, sowie dessen Verwendung, insbesondere zur Ausrüstung von Hohlräumen, Öffnungen, Rohr- und Leitungssystemen (z. B. Kabelkanälen, Kabelrohren, Kabelschächten, Lüftungskanälen, Lüftungsrohren, Lüftungsschächten etc.), Türen, Fenster, Fugen oder dergleichen, insbesondere zu Zwecken des Brandschutzes.

Unter dem Begriff der Intumeszenz versteht man im Rahmen des Brandschutzes ein "Schwellen" bzw. Aufschäumen von Materialien. Intumeszente Baustoffe nehmen unter Hitzeeinwirkung an Volumen zu und nehmen an Dichte ab. Im allgemeinen finden intumeszente Stoffe im vorbeugenden baulichen Brandschutz Anwendung, wo sie folgende Aufgaben haben können:
- Aufschäumen (d. h. Ausbildung einer leichten Isolierungsschicht als Hitzebremse): Beispielsweise in die Isolation eines Kabels eingebrachte Stoffe (z. B. expandierbares Graphit bzw. Blähgraphit) setzen bei Wärmeeinwirkung Gase frei, so daß zusammen mit einem geeigneten Kunststoffisolierungsmaterial eine geschäumte Schicht entsteht, welche die Sauerstoff zufuhr und somit die Flammausbreitung behindert.
- Endotherme Wirkung durch Hydrate, die kühlenden Dampf spenden.
- Aufbringen von Expansionsdruck (z. B. zur Versiegelung von Kunststoff rohren) in Durchbruchsbereichen (z. B. Rohrleitungsdurchgänge in Wänden oder Decken) im Brandfall.

Intumeszente Baustoffe werden auch synonym als Dämmschichtbildner bezeichnet. In der Bundesrepublik Deutschland sind intumeszente Baustoffe Bauteile, welche diese Baustoffe beinhalten, zulassungspflichtig.

Für weitergehende Einzelheiten zu dem Begriff der Intumeszenz kann beispielsweise verwiesen werden auf Römpp Chemielexikon, 10. Auflage, Georg Thieme, Verlag Stuttgart/New York, Band 3, 1997, Seite 1948, Stichwort: "Intumeszenz", sowie die dort referierte Literatur.

Intumeszente Baustoffe und Intumeszenzmaterialien und -massen sind aus dem Stand der Technik bekannt.

In diesen Materialien des Standes der Technik kommt als Intumeszenzmittel, welches unter Wärme- bzw. Hitzeeinwirkung expandiert, oftmals sogenannter Blähgraphit zum Einsatz. Wie Diamant, so ist Graphit eine reine Kohlenstoffmodifikation, wobei die hexagonalen Grundeinheiten des Graphits sehr stabile Flächengitter ausbilden, zwischen denen nur schwache Bindungskräfte wirken. Aus dieser Struktur heraus resultieren die besonderen Materialeigenschaften des Graphits, nämlich die gute elektrische und thermische Leitfähigkeit, hervorragende Schmiereigenschaften, eine extreme Temperatur- und Oxidationsresistenz sowie die Fähigkeit zur Ausbildung von Einlagerungsverbindungen. Aufgrund der Schichtgitterstruktur von Graphit können also Atome oder kleine Moleküle zwischen den Kohlenstoffschichten eingelagert bzw. interkaliert werden. Hierdurch entsteht sogenannter Blähgraphit, synonym auch als Blähsalz oder GIC (*Graphite Intercalation Compound*). Hochwertige Blähgraphite weisen einen großen Anteil interkalierter Schichten auf, wobei es sich bei den eingelagerten Molekülen meist um Schwefel- oder Stickstoffverbindungen handelt. Derartige Blähgraphite sind zahlreich im Handel.

Wenn dieser expandierbare Graphit hitzeausgedehnt wird, dehnt er sich volumetrisch stark aus und bildet dabei eine feuerfeste Kohlenstoffmatrix mit niedriger Dichte. Die expandierten Graphitpartikel behalten dabei die Eigenschaften des ursprünglichen Graphits, insbesondere seine Hitze- und Chemikalienbeständigkeit, so daß das Hauptanwendungsgebiet von Blähgraphit der Brandschutz ist. Unter Hitzeeinwirkung werden die Schichten des Blähgraphits durch Thermolyse sozusagen ziehharmonikaartig auseinandergetrieben, so daß die Graphitflocken expandieren. Die Temperatur der Expansion ist abhängig von der jeweiligen Blähgraphitsorte, wobei die Expansion nahezu schlagartig erfolgen kann. Bei freier Expansion kann das Endvolumen das Mehrhundertfache des Ausgangsvolumens erreichen, wobei die Eigenschaften des Blähgraphits, insbesondere die Starttemperatur und das Blähvermögen, hauptsächlich von der Interkalationsgüte und von der Interkalationsverbindung bestimmt werden.

Blähgraphit wird als Flammschutz bereits erfolgreich in Polyurethanschäumen, Polyolefinfolien, Beschichtungen oder Kautschuk- und Gummiprodukten eingesetzt. Für die jeweilige Anwendung stehen oftmals zahlreiche Produkte mit unterschiedlichen Kohlenstoffgehalten und Partikelgrößen zur Verfügung.

So ist beispielsweise aus der EP 0 192 888 A2 ein flammwidriger elastischer Polyurethanschaumstoff bekannt, welcher aus einem Schaumstoffreaktionsgemisch mit einem Polyol und einem organischem Polyisocyanat hergestellt wird, wobei dem Reaktionsgemisch ein Blähgraphit beigemischt wird. Bei dem dort beschriebenen Verfahren besteht jedoch die Gefahr, daß bei der Einlagerung des Blähgraphits die Zellstruktur des aufschäumenden Schaumstoffs gestört wird, so daß sich dadurch schlechtere Dauergebrauchseigenschaften des Schaumstoffs ergeben. Auch wird im Fall der Expansion unter Hitzeeinwirkung (z. B. im Brandfall) infolge der starken Expansion des Blähgraphits eine nur noch unzureichende Strukturstabilisierung des aufgeschäumten Materials erreicht.

Weiterhin betrifft die WO 90/11318 A1 ein Verfahren zur Herstellung eines flammwidrigen elastischen Polyurethanschaums zu Zwecken der Erreichung eines geeigneten Brandverhaltens, welches den strengsten Forderungen und Brandtests entsprechen soll, wobei der dort beschriebene Schaumstoff darüber hinaus fast unveränderte Dauergebrauchseigenschaften aufweisen soll. Zu diesem Zweck wird bei der Herstellung dem Schaumstoffreaktionsgemisch aus Polyol und Polyisocyanat ein Anteil von Blähgraphit in Plättchenform als flammhemmendes Mittel zugesetzt, wobei die Plättchen des Blähgraphits die Größenordnung der entstehenden Schaumstoffzellwände aufweisen, so daß sie in den aufschäumenden Schaumstoff derart eingelagert werden, daß sie zumindest einen Teil der Zellwände ausbilden können. Auch bei dem dort beschriebenen Schaumstoffsystem besteht der entscheidende Nachteil, daß im Fall der Expansion des Blähgraphits, insbesondere im Brandfall, kein langzeitstabiles und strukturstabiles Material erhalten wird, was einer Brandbelastung über einen längeren Zeitraum standzuhalten vermag.

Eine Aufgabe der vorliegenden Erfindung besteht somit darin, ein geeignetes Brandschutzmittel, insbesondere eine Intumeszenzmasse, bereitzustellen, welches die zuvor geschilderten Nachteile des Standes der Technik zumindest weitgehend vermeidet oder aber wenigstens abschwächt.

Insbesondere soll im Rahmen der vorliegenden Erfindung ein flamm- und/oder brandbeständiges wärmeexpandierbares organisch-anorganisch basiertes Hybridmaterial in Form einer Intumeszenzmasse auf Basis eines wärmeexpandierbaren Intumeszenzmittels, insbesondere Blähgraphit, einerseits und eines Kunststoffmaterials (z. B. Polyurethan) bzw. dessen Vorläufer andererseits bereitgestellt werden, bei welchem im Fall der Wärmeexpansion, insbesondere im Brandfall, eine verbesserte Flamm- bzw. Brandresistenz und/oder eine verbesserte mechanische Stabilität gegeben ist.

Zur Lösung des zuvor geschilderten Problems schlägt die vorliegende Erfindung - nach einem ersten Aspekt der vorliegenden Erfindung - ein flamm- und/oder brandbeständiges wärmeexpandierbares organisch-anorganisch basiertes Hybridmaterial, insbesondere eine Intumeszenzmasse, nach Anspruch 1 bzw. nach Anspruch 13 vor; weitere, vorteilhafte Ausgestaltungen sind Gegenstand der diesbezüglichen Unteransprüche.

Weiterhin betrifft die vorliegende Erfindung - gemäß einem zweiten Aspekt der vorliegenden Erfindung - die Verwendung des erfindungsgemäßen flamm- und/oder brandbeständigen, wärmeexpandierbaren organisch-anorganisch basierten Hybridmaterials, insbesondere der Intumeszenzmasse, wie sie in den betreffenden Verwendungsansprüchen definiert ist.

Es versteht sich von selbst, daß nachfolgend sämtliche Ausführungen, welche zu einem Aspekt der vorliegenden Erfindung gemacht werden, für den oder die anderen Aspekte der vorliegenden Erfindung in gleicher Weise entsprechend gelten, ohne daß es einer diesbezüglichen expliziten Erwähnung bedarf.

Für alle nachstehend genannten Werte- und Bereichsangaben gilt, daß es einzelfallbedingt oder anwendungsbezogen erforderlich sein kann, von den nachstehend genannten Werte- und Bereichsangaben abzuweichen, ohne daß der Rahmen der vorliegenden Erfindung verlassen ist. Dies liegt im Rahmen des fachmännischen Könnens.

Weiterhin ist zu beachten, daß alle nachfolgenden Mengenangaben, welche prozentuale Angaben betreffen, stets derart zu verstehen und zu kombinieren sind, daß die Summe aller Inhaltsstoffe stets 100 % bzw. 100 Gew.-% zu ergeben hat.

Gegenstand der vorliegenden Erfindung - gemäß einem ersten Aspekt der vorliegenden Erfindung - ist somit ein flamm- und/oder brandbeständiges, wärmeexpandierbares organisch-anorganisch basiertes Hybridmaterial, insbesondere einer Intumeszenzmasse, welche
(A) mindestens ein wärmeexpandierbares Intumeszenzmittel, insbesondere ein Blähsalz und/oder einen Blähgraphit;
(B) zumindest ein Kunststoffmaterial (z. B. Polyurethan) und/oder dessen Vorläufer (d. h. die Ausgangsverbindungen bzw. Edukte); und
(C) eine Mischung auf Basis mindestens eines Aluminiumsilikates und/oder Alumosilikates einerseits und mindestens eines Salzes andererseits; enthält.

Eine Besonderheit der vorliegenden Erfindung muß also darin gesehen werden, daß im Rahmen der vorliegenden Erfindung das flamm- bzw. brandbeständige Hybridmaterial nach der vorliegenden Erfindung neben dem Intumeszenzmittel (z. B. Blähgraphit) und dem Kohlenstoffmaterial bzw. dessen Vorläufern (z. B. Polyurethan bzw. die entsprechenden Ausgangsverbindungen, d. h. Isocyanate und z. B. Polyole) zusätzliche eine Mischung aus Aluminiumsilikat (z. B. Zeolith) und/oder Alumosilikat einerseits und Salz (z. B. Alkali-, Erdalkali- oder Aluminiumsalz einer organischen Säure, vorzugsweise Calciumstearat, und/ oder aber ein Fettsäuresalz, insbesondere C₁₀-C₃₀-Fettsäuresalz) andererseits enthält.

Infolge der zusätzlichen Inkorporierung der Aluminiumsilikat/Salz-Mischung bzw. Alumosilikat/Salz-Mischung in das erfindungsgemäße flamm- bzw. brandbeständige Hybridmaterial wird ein deutlich verbessertes Brandschutzverhalten erreicht: Unter Hitzeeinwirkung, insbesondere im Brandfall, sintert das Intumeszenzmittel, insbesondere der Blähgraphit, mit der Aluminiumsilikat/Salz-Mischung bzw. Alumosilikat/Salz-Mischung zusammen, so daß das Intumeszenzmittel, insbesondere der Blähgraphit, stabil gebunden wird und sich eine brand- bzw. flammresistente Verkrustung ausbildet. Dies führt dazu, daß eine verlängerte Brandresistenz bzw. Flammbeständigkeit erreicht wird.

Im Rahmen der vorliegenden Erfindung ist das wärmeexpandierbare Intumeszenzmittel (A) insbesondere ein Blähsalz und/oder ein Blähgraphit. Vorteilhafterweise weist der Blähgraphit einen Kohlenstoffgehalt von mindestens 90 Gew.-%, vorzugsweise mindestens 95 Gew.-%, bezogen auf den Blähgraphit auf. In erfindungsgemäß bevorzugter Weise wird ein pH-neutrales Blähgraphit ausgewählt.

Üblicherweise ist das Intumeszenzmittel (A), insbesondere der Blähgraphit, teilchenförmig, vorzugsweise plättchenförmig, ausgebildet. Dabei weisen die Teilchen des Intumeszenzmittels (A) im allgemeinen Teilchengrößen von 0,01 bis 2 mm, vorzugsweise 0,05 bis 1,5 mm, vorzugsweise 0,1 bis 1 mm, auf. Vorteilhafterweise weisen mindestens 50 %, insbesondere mindestens 60 %, vorzugsweise mindestens 70 %, besonders bevorzugt mindestens 80 %, der Teilchen des Intumeszenzmittels (A) Teilchengrößen von mindestens 200 µm, vorzugsweise mindestens 300 µm auf.

Üblicherweise wird das Intumeszenzmittel (A) derart ausgewählt, daß die Wärmeexpansion des Intumeszenzmittels (A), insbesondere des Blähgraphits, ab Temperaturen von 120 °C, insbesondere ab Temperaturen von 150 °C, vorzugsweise ab Temperaturen von 160 °C, einsetzt.

Üblicherweise wird ein Intumeszenzmittel (A), insbesondere ein Blähgraphit, eingesetzt, das eine Wärmeexpansion bei 600 °C von mindestens 50 cm³/g, insbesondere mindestens 75 cm³/g, vorzugsweise mindestens 90 cm³/g, besonders bevorzugt mindestens 95 cm³/g, und/oder eine Wärmeexpansion bei 1.000 °C von mindestens 100 cm³/g, insbesondere mindestens 200 cm³/g, vorzugsweise mindestens 250 cm³/g, besonders bevorzugt mindestens 300 cm³/g, aufweist.

Die Mengen an Intumeszenzmittel (A), insbesondere Blähgraphit, in dem erfindungsgemäßen Hybridmaterial kann in weiten Bereichen variieren. Im allgemeinen enthält das erfindungsgemäße Hybridmaterial als Intumeszenzmittel (A), insbesondere Blähgraphit, in Mengen von 10 bis 50 Gew.-%, insbesondere 15 bis 45 Gew.-%, vorzugsweise 20 bis 30 Gew.-%, bezogen auf das erfindungsgemäße Hybridmaterial. Das Kunststoffmaterial und/oder dessen Vorläufer (B) können in dem erfindungsgemäßen Hybridmaterial gleichermaßen in stark variierenden Mengen vorhanden sein. Insbesondere kann das Kunststoffmaterial und/oder dessen Vorläufer (B) in dem erfindungsgemäßen Hybridmaterial, bezogen auf das Hybridmaterial, in Mengen von 20 bis 90 Gew.-%, insbesondere 30 bis 80 Gew.-%, vorzugsweise 40 bis 70 Gew.-%, vorhanden sein.

Bei dem Kunststoffmaterial (B) kann es sich insbesondere um ein Matrix bildendes, insbesondere eine Schaumstruktur bildendes Polymer handeln. Beispielsweise kann das Kunststoffmaterial (B) ein Polyurethan sein.

Weiterhin kann die Komponente (B) eine Mischung mindestens eines Isocyanats zusammen mit mindestens einer isocyanatreaktiven Verbindung, insbesondere einem Polyol, und/oder mindestens ein durch Reaktion mindestens eines Isocyanats mit mindestens einer isocyanatreaktiven Verbindung, insbesondere einem Polyol, erhältliches Polyurethan umfassen.

Insbesondere kann die Komponente (B) eine Mischung mindestens eines Isocyanats zusammen mit mindestens einer isocyantreaktiven Verbindung, insbesondere einem Polyol, und/oder mindestens ein durch Reaktion mindestens eines Isocyanats mit mindestens einer isocyantreaktiven Verbindung, insbesondere einem Polyol, erhältliches Polyurethan umfassen.

Dabei kann das Hybridmaterial das Isocyanat insbesondere in Mengen von 5 bis 25 Gew.-%, insbesondere 10 bis 20 Gew.-%, bezogen auf das Hybridmaterial, enthalten und/oder die isocyanatreaktive Verbindung, insbesondere das Polyol, in Mengen von 20 bis 80 Gew.-%, insbesondere 30 bis 70 Gew.-%, vorzugsweise 35 bis 60 Gew.-%, bezogen auf das Hybridmaterial, enthalten.

Weiterhin kann in der Mischung von Isocyanat und isocyanatreaktiver Verbindung, insbesondere Polyol, das Verhältnis von isocyantreaktiver Verbindung/Isocyanat derart sein, daß ein Überschuß an NCO-Gruppen vorliegt, insbesondere mit der Maßgabe, daß das Verhältnis von Anzahl der NCO-Gruppen des Isocyanats zu isocyanatreaktiven Gruppen, insbesondere OH-Gruppen, der isocyanatreaktiven Verbindung, insbesondere des Polyols, mindestens 0,90, vorzugsweise mindestens 1, beträgt und insbesondere im Bereich zwischen 1 : 1 bis 1,5 : 1, vorzugsweise 1,05 : 1 bis 1,2 : 1, variiert, und/oder insbesondere mit der Maßgabe, daß der Gehalt an freien, vorzugsweise endständigen NCO-Gruppen in dem erhaltenen Additionsprodukt, insbesondere Polyurethan, 0,01 Gew.-% bis 20 Gew.-%, insbesondere 0,1 Gew.-% bis 10 Gew.-%, bezogen auf das Additionsprodukt, beträgt.

Des weiteren kann das Isocyanat ausgewählt sein aus Diisocyanaten und Polyisocyanaten, vorzugsweise aliphatischen und/oder aromatischen Diisocyanaten und/oder Polyisocyanaten, insbesondere mit freien, vorzugsweise endständigen NCO-Gruppen

Beispielsweise kann das Isocyanat ausgewählt sein aus der Gruppe von Diisocyanatodiphenylmethanen (MDIs), insbesondere 4,4'-Diisocyanatodiphenylmethan und 2,4'-Diisocyanatodiphenylmethan, sowie Mischungen verschiedener Diisocyanatodiphenylmethane; 1,5-Diisocyanatonaphthalin (NDI); Diisocyanatotoluolen (TDIs), insbesondere 2,4-Diisocyanatotoluol, sowie TDI-Urethdionen, insbesondere dimerem 1-Methyl-2,4-phenylen-diisocyanat (TDI-U), und TDI-Harnstoffen; 1-Isocyanato-3-isocyanatomethyl-3,5,5-trimethylcyclohexan (IPDI) und dessen Isomeren und Derivaten, insbesondere Di-, Tri- und Polymerisaten, sowie IPDI-Isocyanurat (IPDI-T); 3,3'-Dimethylbiphenyl-4,4'-diisocyanat (TODI); 3,3'-Diisocyanato-4,4'-dimethyl-N,N'-diphenylharnstoff (TDIH); sowie Mischungen und Prepolymeren der zuvor genannten Verbindungen.

Die isocyanatreaktive Verbindung kann mindestens zwei gegenüber Isocyanaten reaktive Gruppen je Molekül aufweisen, insbesondere Hydroxyl-, Amino-, Carboxyl-, Carbonsäureanhydrid-, Mercapto- und/oder gegebenenfalls substituierte Silylgruppen, vorzugsweise Hydroxylgruppen. Insbesondere kann die isocyanatreaktive Verbindung mindestens zwei gegenüber Isocyanaten und/oder Polyisocyanaten reaktive Wasserstoffatome je Molekül aufweisen. Im allgemeinen kann die isocyanatreaktive Verbindung eine gewichtsmittlere Molekularmasse im Bereich von 500 bis 10.000 g/mol, vorzugsweise 750 bis 5.000 g/mol, besonders bevorzugt 800 bis 2.000 g/mol, aufweisen.

Beispielsweise kann die isocyanatreaktive Verbindung ausgewählt sein aus der Gruppe von isocyanatreaktiven, insbesondere hydroxyfunktionellen Polyestern, Polycaprolactonpolyestern, Polyethern, Polyurethanen, Polyamiden, Polytetrahydrofuranen, Polyacrylaten und Polymethacrylaten, jeweils mit mindestens zwei isocyanatreaktiven Wasserstoffatomen, vorzugsweise mindestens zwei Hydroxylgruppen, je Molekül. Beispielsweise kann die isocyanatreaktive Verbindung ein Polyol sein, insbesondere mit einer mittleren Funktionalität im Bereich von 2 bis 10, insbesondere 2,2 bis 5, vorzugsweise 2,5 bis 4. Zum Beispiel kann die isocyanatreaktive Verbindung eine Hydroxylzahl von mindestens 25 mg KOH/g, insbesondere mindestens 50 mg KOH/g, vorzugsweise mindestens 75 mg KOH/g, besonders bevorzugt mindestens 100 mg KOH/g, ganz besonders bevorzugt im Bereich von 100 bis 300 mg KOH/g, aufweisen.

Weiterhin kann es vorgesehen sein, daß die Mischung aus Isocyanat und isocyanatreaktiver Verbindung, insbesondere Polyol, außerdem einen Katalysator enthalten kann. Dabei kann der Katalysator ein in der Polyurethanchemie üblicher Katalysator sein. Der Katalysator kann ausgewählt sein aus der Gruppe von (i) organischen Eisen-, Blei-, Cobalt-, Wismuth-, Antimon-, Zinn- und Zinkverbindungen; (ii) Katalysatoren auf Aminbasis, insbesondere tertiären Aminen, vorzugsweise Triethylendiamin (TEDA); sowie Kombinationen der zuvor genannten Verbindungen. Der Katalysator kann in Mengen von 0,01 bis 5 Gew.-%, insbesondere 0,05 bis 2 Gew.-%, vorzugsweise 0,1 bis 1 Gew.-%, bezogen auf die Mischung, eingesetzt sein.

Was die Menge an Mischung (C) in dem erfindungsgemäßen Hybridmaterial anbelangt, so kann diese gleichermaßen in weiten Bereichen variieren. Üblicherweise enthält das erfindungsgemäße Hybridmaterial die Mischung (C) in Mengen von 1 bis 30 Gew.-%, insbesondere 2 bis 20 Gew.-%, vorzugsweise 4 bis 18 Gew.-%, bezogen auf das erfindungsgemäße Hybridmaterial.

Üblicherweise enthält die Mischung (C) das Aluminiumsilikat und/oder Alumosilikat einerseits und das Salz anderseits in einem gewichtsbezogenen Aluminiumsilikat/Salz-Mengenverhältnis bzw. Alumosilikat/Salz-Mengenverhältnis im Bereich von 0,1 : 1 bis 10 : 1, insbesondere 0,5 : 1 bis 2 : 1, vorzugsweise 0,75 : 1 bis 1,25 : 1, besonders bevorzugt etwa 1 : 1.

Der Begriff der Aluminiumsilikate wird im Rahmen der vorliegender Erfindung insbesondere als Sammelbezeichnung für Verbindungen mit unterschiedlichen Anteilen an Al₂O₃ und SiO₂ verwendet, wobei das Silizium stets tetraedrisch von vier Sauerstoffverbindungen umgeben ist und Aluminium in oktaedrischer Koordination vorliegt, wohingegen der Begriff der Alumosilikate (synonym auch als Aluminosilikate bezeichnet) solche Mineralien bezeichnet (wie z. B. Zeolith, Feldspat etc.), bei denen das Aluminium auch Siliziumgitterplätze besetzt. Zu den Aluminiumsilikaten gehören unter anderem die trimorphe Gruppe Al₂SiO₅ bzw. Al₂O₃ • SiO₂ mit den Mineralien Andalusit. Sillimanit und Kyanit, ferner Mullit, Pyrophyllit und viele Tonminerale. Für weitergehende Einzelheiten wird verwiesen auf Römpp Chemielexikon, 10. Auflage, Band 1, Georg Thieme Verlag, Stuttgart/New York, 1996, Stichworte: "Aluminiumsilikate" und "Alumosilikate", einschließlich der dort referierten Literatur, wobei die vorgenannten Zitatstellen hiermit durch Bezugnahme eingeschlossen sind.

Wie bereits zuvor ausgeführt, ist das Aluminiumsilikat und/oder Alumosilikat der Mischung (C) bevorzugtermaßen ein Zeolith.

Was das Salz der Mischung (C) anbelangt, so können hier Alkali-, Erdalkali- oder Aluminiumsalze, insbesondere Erdalkalisalze, bevorzugt Calciumsalze, insbesondere Salze von organischen Säuren, ganz besonders bevorzugt Calciumstearat, zum Einsatz kommen. Erfindungsgemäß bevorzugt sind Fettsäuresalze, insbesondere C₁₀-C₃₀-Fettsäuresalze. Insbesondere Calciumstearat ist außerdem im Hinblick auf die Verarbeitungseigenschaften des erfindungsgemäßen Hybridmaterials, insbesondere sein Gleit- und Fließverhalten, positiv.

Vorteilhafterweise weist das Salz der Mischung (C) einen Schmelzpunkt auf, welcher höchstens um 50 °C, insbesondere höchstens um 30 °C, vorzugsweise um 20 °C, von der Temperatur abweicht, bei welcher die Wärmeexpansion des Intumeszenzmittels (A), insbesondere des Blähgraphits, einsetzt. Besonders bevorzugt ist es, wenn der Schmelzpunkt unterhalb oder in etwa bei der Temperatur liegt, bei welcher die Wärmeexpansion des Intumeszenzmittels (A) einsetzt.

Im allgemeinen liegt der Schmelzpunkt des Salzes der Mischung (C) im Bereich von 100 °C bis 200 °C, insbesondere 120 °C bis 180 °C, vorzugsweise 130 °C bis 160 °C.

Vorteilhafterweise enthält das erfindungsgemäße Hybridmaterial das Aluminiumsilikat und/oder Alumosilikat, insbesondere den Zeolith, und/oder das Salz jeweils teilchenförmig. Dabei kann das Aluminiumsilikat und/oder Alumosilikat insbesondere einen mittleren Teilchendurchmesser D50 von höchstens 10 µm, insbesondere höchstens 5 µm, vorzugsweise höchstens 3 µm, und/oder einen mittleren Teilchendurchmesser D90 von höchstens 50 µm, insbesondere höchstens 20 µm, vorzugsweise höchstens 15 µm, aufweisen. Im allgemeinen weist das Salz der Mischung (C) Teilchengrößen im Bereich von 0,001 bis 2 mm, vorzugsweise 0,005 bis 1,5 mm, vorzugsweise 0,01 bis 1 mm, auf.

Weiterhin kann das erfindungsgemäße Hybridmaterial außerdem mindestens ein Fasermaterial (D), insbesondere ein Kunststoff-Fasermaterial, vorzugsweise in Form von Polyacrylnitrilfasern, aufweisen. Dieses Fasermaterial dient zur zusätzlichen Steigerung der Festigkeit bzw. zu Zwecken der Armierung des erfindungsgemäßen Hybridmaterials, insbesondere nach Wärmeexpansion des Intumeszenzmittels. Die Mengen am inkorporierten Fasermaterial kann in weiten Bereichen variieren; insbesondere ist das Fasermaterial in Mengen von 0,5 bis 5 Gew.-%, vorzugsweise 1 bis 2 Gew.-%, bezogen auf das erfindungsgemäße Hybridmaterial, vorhanden.

Ein Vorteil des erfindungsgemäßen Hybridmaterials ist darin zu sehen, daß es frei von Halogenen und/oder Weichmachern ausgebildet ist. Weiterhin ist das erfindungsgemäße Hybridmaterial frei von Phosphorsäureestern, insbesondere frei von toxischen organischen Phosphorsäureestern, ausgebildet, da seine intrinsische Brandfestigkeit bzw. Flammbeständigkeit ausreichend groß ist, um ohne die vorgenannten Substanzen auszukommen.

Das erfindungsgemäße Hybridmaterial ist unter Normalbedingungen (20 °C, 101325 Pa) fest ausgebildet, d. h. liegt im festen Aggregatzustand vor. Mit anderen Worten liegt das erfindungsgemäße Hybridmaterial unter Normalbedingungen als festes, insbesondere homogenes Gemisch der einzelnen Inhaltsstoffe vor.

Von weiterem Vorteil ist, daß das erfindungsgemäße Hybridmaterial selbstklebend und/oder eigenklebrig bzw. adhäsiv ausgebildet ist. Auf diese Weise kann es ohne weiteres auf die entsprechenden Materialien appliziert werden (z. B. Rohr- und Leitungssysteme), wo es dann aufgrund seiner Eigenadhäsion verbleibt. Dennoch ist es nicht ausgeschlossen, das erfindungsgemäße Hybridmaterial nachträglich unter Verwendung eines zusätzlichen Klebstoffs zu verkleben, auch wenn dies die weniger bevorzugte Ausführungsform ist.

Wie zuvor geschildert, ist das erfindungsgemäße Hybridmaterial bei Raumtemperatur fest und/oder formstabil ausgebildet, besitzt jedoch eine gewisse Elastizität.

Ein weiterer Vorteil des erfindungsgemäßen Hybridmaterials ist darin zu sehen, daß es beständig gegenüber dem Einwirken von Wasser und/oder von Gasen, insbesondere Luft, Sauerstoff oder Kohlendioxid, und/oder von Chemikalien, insbesondere Wasserglas ist.

Ein weiterer Vorteil ist, daß das erfindungsgemäße Hybridmaterial zu Formkörpern und/oder Formteilen verarbeitbar ist (z. B. streifenförmige Materialien etc.). Zu diesem Zweck ist das erfindungsgemäße Hybridmaterial extrudierbar und/oder gießbar ausgebildet, wobei es zu diesem Zweck oberhalb seiner Fließtemperatur erwärmt werden muß, vorteilhafterweise aber unterhalb der Wärmeexpansionstemperatur des Intumeszenzmittels.

Gemäß einem besonders vorteilhaften Aspekt der vorliegenden Erfindung betrifft die vorliegende Erfindung ein flamm- und/oder brandbeständiges, wärmeexpandierbares, organisch-anorganisch basiertes Hybridmaterial, insbesondere eine Intumeszenzmasse, insbesondere wie sie zuvor beschrieben worden ist, welche enthält:
(A) Blähgraphit, insbesondere in Mengen von 10 bis 50 Gew.-%, insbesondere 15 bis 45 Gew.-%, vorzugsweise 20 bis 30 Gew.-%, bezogen auf das Hybridmaterial, vorzugsweise mit Teilchengrößen von mindestens 200 µm, vorzugsweise mindestens 300 µm, für 80 % der Blähgraphitteilchen;
(B) mindestens ein matrixbildendes, insbesondere eine Schaumstruktur bildendes Polymer, vorzugsweise ein Polyurethan, insbesondere in Mengen von 20 bis 90 Gew.-%, insbesondere 30 bis 80 Gew.-%, vorzugsweise 40 bis 70 Gew.-%, bezogen auf das Hybridmaterial;
(C) eine Mischung auf Basis mindestens eines Zeoliths einerseits und mindestens eines Alkali-, Erdalkali- oder Aluminiumsalzes einer organischen Säure, besonders bevorzugt Calciumstearat, andererseits, insbesondere in Mengen von 1 bis 30 Gew.-%, insbesondere 2 bis 20 Gew.-%, vorzugsweise 4 bis 18 Gew.-%, bezogen auf das Hybridmaterial, und/oder insbesondere mit einem gewichtsbezogenen Zeolith/Salz-Mengenverhältnis im Bereich von 0,1 : 1 bis 10: 1, insbesondere 0,5 : 1 bis 2 : 1, vorzugsweise 0,75 : 1 bis 1,25 : 1, besonders bevorzugt etwa 1:1;
(D) gegebenenfalls mindestens ein Fasermaterial, insbesondere Kunststoff-Fasermaterial, vorzugsweise in Form von Polyacrylnitrilfasern, insbesondere in Mengen von 0,5 bis 5 Gew.-%, vorzugsweise 1 bis 2 Gew.-%, bezogen auf das Hybridmaterial.

Bislang ist die gemeinsame Verwendung von Aluminiumsilikaten bzw. Alumosilikaten zusammen mit Salzen, insbesondere Salzen organischer Säuren, für die Anwendung in Brandschutzschäumen noch nicht realisiert worden. Die Wirkungsweise von Dämmschichtbildnern beruht unter anderem darauf, daß im Brandfalle diese eine mikroporöse, wärmedämmende Kohlenstoffschaumschicht ausbilden, welche den Untergrund eine Zeit lang vor der Hitze schützt; diese Kohlenstoffschaumschicht wirkt am besten, wenn sie möglichst dicht, homogen und in sich gut gebunden ist. Dies wird unter anderem erreicht durch die Zugabe von anorganischen Flammschutzmitteln, Pigmenten, Füllstoffen oder dergleichen, wie z. B. Boraten, Titandioxid, Aluminiumhydroxid etc. Eine in sich nicht gut gebundene Kohlenstoffschaumschicht wird im Extremfall durch die Strömungen der Brandgase frühzeitig weggeblasen. Der Anmelder konnte überraschend herausfinden, daß bei Flammeneinwirkung auch eine gut gebundene Kohlenstoffschaumschicht entsteht, wenn der Dämmschichtbildner ein Gemisch aus einem insbesondere organischem Salz und einem Silikat enthält, vorzugsweise ein Gemisch aus Calciumstearat und einem Alumosilikat, wie z. B. einem Zeolith. Das Calciumstearat brennt bei Flammeneinwirkung ab und zurück bleibt bzw. bleiben Calciumoxid und/oder Calciumhydroxid, welche mit dem Alumosilikat verkrusten und so zu einer stabilen Kohlenstoffschaumschicht beitragen. Ein solches Konzept ist bislang im Stand der Technik noch nicht realisiert worden.

Ein weiterer Aspekt der vorliegenden Erfindung ist die erfindungsgemäße Verwendung des zuvor beschriebenen flamm- und/oder brandbeständigen, wärmeexpandierbaren organisch-anorganisch basierten Hybridmaterials nach der vorliegenden Erfindung, insbesondere der zuvor beschriebenen erfindungsgemäßen Intumeszenzmasse, wie sie in den entsprechenden Verwendungsansprüchen definiert ist.

So läßt sich das erfindungsgemäße Hybridmaterial beispielsweise zur Ausrüstung von Hohlräumen, von Öffnungen, von Rohr- und Leitungssystemen (z. B. Kabelkanälen, Kabelrohren, Kabelschächten, Lüftungskanälen, Lüftungsrohren, Lüftungsschächten oder dergleichen), von Türen (z. B. für Dichtungen oder Füllmaterialien für Türen), von Fenstern oder von Fugen einsetzen.

So ermöglicht das erfindungsgemäße Hybridmaterial beispielsweise ein flamm- und/oder brandbeständiges Verschließen bzw. ein wenigstens partielles Ausfüllen von Hohlräumen von Öffnungen, von Rohr- und Leitungssystemen, insbesondere Kabelkanälen, Kabelrohren, Kabelschächten, Lüftungskanälen, Lüftungsrohren, Lüftungsschächten oder dergleichen, von Türen, von Fenstern oder von Fugen im Brandfall.

Zu den vorgenannten Zwecken kann das erfindungsgemäße Material zur äußeren Ummantelung und/oder zur inneren Auskleidung oder Beschichtung eingesetzt werden. Weiterhin kann zu den vorgenannten Zwecken das erfindungsgemäße Hybridmaterial zum partiellen Ausfüllen oder Verschließen von Hohlräumen, Öffnungen, Fugen oder dergleichen eingesetzt werden.

Eine mögliche Anwendung bzw. Applikation erfolgt dadurch, daß das Hybridmaterial im fließfähigen Zustand (vorzugsweise unterhalb der Wärmeexpansionstemperatur) auf oder in das zu behandelnde Material aufgetragen, insbesondere gegossen, extrudiert oder dergleichen, wird, woran sich ein Abkühlvorgang anschließt, so daß das aufgetragene Hybridmaterial infolge seiner Eigenadhäsion auf den behandelten Materialien zum Haften kommt.

Gemäß einer alternativen, erfindungsgemäß weniger bevorzugten Ausführungsform kann aber auch das Hybridmaterial zunächst in den fließfähigen Zustand überführt werden, und zu einem Formteil verarbeitet werden, insbesondere mittels Gießen, Extrusion oder dergleichen, wobei dies vorteilhafterweise bei Temperaturen unterhalb der Wärmeexpansionstemperatur des Hybridmaterials erfolgt, woran sich ein Abkühlvorgang anschließt. Abschließend wird das so erhaltene Formteil aus dem erfindungsgemäßen Hybridmaterial auf oder in das zu behandelnde Material aufgebracht bzw. appliziert, beispielsweise mittels Verkleben.

Versuche des Anmelders mit dem erfindungsgemäßen Hybridmaterial haben gezeigt, daß das erfindungsgemäße Hybridmaterial im Brandfall gezielt und ausreichend stark selbsttätig aufschäumt und im Rahmen von Brandtests mehr als 90 Minuten lang stabil bleiben und auf diese Weise zuverlässig die betreffenden Bereiche, welche es zu schützen gilt, von dem eigentlichen Brandherd abschirmt.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt. Die vorliegende Erfindung wird nachfolgend anhand von Ausführungsbeispielen veranschaulicht, welche die vorliegende Erfindung jedoch keinesfalls beschränken.

### AUSFÜHRUNGSBEISPIELE:

### Beispiele 1 und 2:

Zwei erfindungsgemäße Hybridmaterialien werden entsprechend den folgenden Spezifikationen hergestellt:

| Bestandteil | Hybridmaterial I Menge in Gew.-% | Hybridmaterial II Menge in Gew.-% |
|---|---|---|
| Polyol 1 | 24,846 | 22,203 |
| Polyol 2 | 24,846 | 22,203 |
| Isocyanat (MDI) | 16,399 | 14,636 |
| Katalysator (TEDA) | 0,068 | 0,060 |
| Blähgraphit pH = 7 | 27,629 | 24,690 |
| Zeolith | 2,485 | 7,549 |
| Calciumstearat | 2,485 | 7,549 |
| Polyacrylnitrilfasern | 1,242 | 1,110 |
| Summe | 100 | 100 |

Die vorgenannten Hybridmaterialien werden wie folgt hergestellt: Alle Mischungsbestandteile mit Ausnahme des Isocyanats, wie sie in der vorstehenden Tabelle spezifiziert worden sind, werden in einem Rührkessel vorgelegt und bei Raumtemperatur homogenisiert und nachfolgend auf Temperaturen von 30 bis 40 °C erwärmt. Anschließend wird das Isocyanat (MDI) zugegeben und weiter gerührt. Es setzt die Additionsreaktion zwischen den Polyolen und dem Isocyanat zum Polyurethankunststoff ein, in den die übrigen Inhaltsstoffe eingelagert sind. Auf diese Weise werden die erfindungsgemäßen Hybridmaterialien I und II erhalten.

### Beispiel 3:

In einem ersten Ansatz werden die Hybridmaterialien I und II unterhalb ihrer Wärmeexpansionstemperatur zu flachen Streifen (ca. 2 bis 4 cm Dicke) gegossen und erkalten gelassen. Anschließend werden die Streifen zur Innenauskleidung eines Kabelkanals verwendet und hierin flächendeckend, d. h. vollflächig, appliziert. In einem zweiten Ansatz werden die erfindungsgemäßen Hybridmaterialien direkt in den Kabelkanal gegossen und dort erkalten gelassen, so daß gleichermaßen eine vollflächige Innenbeschichtung mit den erfindungsgemäßen Hybridmaterialien resultiert.

### Beispiel 4:

Die in den vorangehenden Beispielen beschichteten Kabelkanäle werden unter Einsatzbedingungen getestet. Hierzu wird in einem Brandschutztest die Wärmeexpansion der Materialien ausgelöst, welche bei Temperaturen von ca. 180 bis 200 °C einsetzt. Bei allen erfindungsgemäßen Hybridmaterialien erfolgt in allen vier Ausführungsbeispielen eine gezielte und starke Expansion unter Flammeinwirkung, welche zu einem Verschließen des Kabelkanals führt, wobei der Brandtests über 90 Minuten durchgeführt wird und die erfindungsgemäßen Hybridmaterialien über diesen Zeitraum stabil bleiben und einen zuverlässigen Brandschutz liefern. Insbesondere bleibt das ausgeschäumte Material formstabil über diesen Zeitraum erhalten und verschließt dicht den Kabelkanal.
Das vorangehende Beispiel wird wiederholt, jedoch unter Weglassen der Zeolith- und Calciumstearatkomponente, so daß nichterfindungsgemäße Hybridmaterialien resultieren. Bereits bei Ausbildung der Formkörper, insbesondere beim Gießvorgang, fällt die schlechtere Verarbeitbarkeit, insbesondere die geringere Formstabilität, der nichterfindungsgemäßen Hybridmaterialien auf. Bei Durchführung des Brandtests zeigt sich bereits nach wenigen Minuten (ca. 3 bis 4 Minuten) ein gewisses Einbrechen und Zerfließen der nichterfindungsgemäßen Hybridmaterialien bzw. die Ausbildung von Löchern innerhalb des Kabelkanals; die nichterfindungsgemäßen Hybridmaterialien verfügen nicht über eine derartige Brandschutzfestigkeit über einen langen Zeitraum, wie dies die erfindungsgemäßen Hybridmaterialien zu realisieren imstande sind. Dies belegt, daß durch die gezielte Inkorporierung einer Mischung aus Aluminiumsilikat und/oder Alumosilikat, insbesondere Zeolith, einerseits und Salz, insbesondere Calciumstearat, andererseits (vorzugsweise in etwa gleichen Mengen) eine gezielte Verbesserung im Brandschutzverhalten von Blähgraphit enthaltenden Kunststoffmaterialien, insbesondere Polyurethanmaterialien, erreicht werden kann, insbesondere eine verlängerte Brandfestigkeit und erhöhte Formstabilität, was sich möglicherweise (ohne sich auf eine bestimmte Theorie festlegen zu wollen) durch Sintervorgänge in den erfindungsgemäßen Intumeszenzmaterialien erklären läßt (d. h. Versintern von Zeolith und Calciumstearat zusammen mit dem Blähgraphit), so daß es im Brandfall zu gewünschten Erhärtungen, insbesondere Verkrustungen, in den erfindungsgemäßen Materialien kommt.

## Patentansprüche

1. Flamm- und/oder brandbeständiges, wärmeexpandierbares organisch-anorganisch basiertes Hybridmaterial, insbesondere Intumeszenzmasse, enthaltend
(A) mindestens ein wärmeexpandierbares Intumeszenzmittel;
(B) mindestens ein Kunststoffmaterial und/oder dessen Vorläufer;
(C) eine Mischung auf Basis mindestens eines Aluminiumsilikates und/oder Alumosilikates einerseits und mindestens eines Salzes anderseits.

2. Hybridmaterial nach Anspruch 1, **dadurch gekennzeichnet, daß** das wärmeexpandierbare Intumeszenzmittel (A) ein Blähsalz und/oder ein Blähgraphit ist, insbesondere wobei der Blähgraphit einen Kohlenstoffgehalt von mindestens 90 Gew.-%, vorzugsweise mindestens 95 Gew.-%, bezogen auf den Blähgraphit, aufweist und/oder insbesondere wobei der Blähgraphit pH-neutral ausgebildet ist und/oder einen pH-Wert von 7 aufweist.

3. Hybridmaterial nach Anspruch 1 oder 2, **dadurch gekennzeichnet, daß** das Intumeszenzmittel (A), insbesondere der Blähgraphit, teilchenförmig, insbesondere plättchenförmig, vorliegt, insbesondere wobei die Teilchen des Intumeszenzmittels (A) Teilchengrößen im Bereich von 0,01 bis 2 mm, vorzugsweise 0,05 bis 1,5 mm, vorzugsweise 0,1 bis 1 mm, aufweisen und/oder insbesondere wobei mindestens 50 %, insbesondere mindestens 60 %, vorzugsweise mindestens 70 %, besonders bevorzugt mindestens 80 %, der Teilchen des Intumeszenzmittels (A) Teilchengrößen von mindestens 200 µm, vorzugsweise mindestens 300 µm, aufweisen.

4. Hybridmaterial nach einem der vorangehenden Ansprüche, **dadurch gekennzeichnet, daß** das Intumeszenzmittel (A), insbesondere der Blähgraphit, in Mengen von 10 bis 50 Gew.-%, insbesondere 15 bis 45 Gew.-%, vorzugsweise 20 bis 30 Gew.-%, bezogen auf das Hybridmaterial, vorhanden ist.

5. Hybridmaterial nach einem der vorangehenden Ansprüche, **dadurch gekennzeichnet, daß** das Kunststoffmaterial und/oder dessen Vorläufer (B) in Mengen von 20 bis 90 Gew.-%, insbesondere 30 bis 80 Gew.-%, vorzugsweise 40 bis 70 Gew.-%, bezogen auf das Hybridmaterial, vorhanden ist.

6. Hybridmaterial nach einem der vorangehenden Ansprüche, **dadurch gekennzeichnet, daß** das Kunststoffmaterial (B) ein matrixbildendes, insbesondere eine Schaumstruktur bildendes Polymer ist und/oder daß das Kunststoffinaterial (B) ein Polyurethan ist und/oder daß die Komponente (B) eine Mischung mindestens eines Isocyanats zusammen mit mindestens einer isocyantreaktiven Verbindung, insbesondere einem Polyol, und/oder mindestens ein durch Reaktion mindestens eines Isocyanats mit mindestens einer isocyantreaktiven Verbindung, insbesondere einem Polyol, erhältliches Polyurethan umfaßt.

7. Hybridmaterial nach einem der vorangehenden Ansprüche, **dadurch gekennzeichnet, daß** das Hybridmaterial die Mischung (C) in Mengen von 1 bis 30 Gew.-%, insbesondere 2 bis 20 Gew.-%, vorzugsweise 4 bis 18 Gew.-%, bezogen auf das Hybridmaterial, enthält.

8. Hybridmaterial nach einem der vorangehenden Ansprüche, **dadurch gekennzeichnet, daß** die Mischung (C) das Aluminiumsilikat und/oder Alumosilikat einerseits und das Salz anderseits in einem gewichtsbezogenen Aluminiumsilikat/Salz-Mengenverhältnis bzw. Alumosilikat/Salz-Mischungsverhältnis im Bereich von 0,1 : 1 bis 10: 1, insbesondere 0,5 : 1 bis 2 : 1, vorzugsweise 0,75 : 1 bis 1,25 : 1, besonders bevorzugt etwa 1 : 1, enthält.

9. Hybridmaterial nach einem der vorangehenden Ansprüche, **dadurch gekennzeichnet, daß** das Aluminiumsilikat und/oder Alumosilikat der Mischung (C) ein Zeolith ist.

10. Hybridmaterial nach einem der vorangehenden Ansprüche, **dadurch gekennzeichnet, daß** das Salz der Mischung (C) ein Alkali-, Erdalkali- oder Aluminiumsalz, insbesondere Erdalkalisalz, bevorzugt Calciumsalz, insbesondere ein Salz einer organischen Säure, besonders bevorzugt Calciumstearat, ist und/oder daß das Salz der Mischung (C) Fettsäuresalz, insbesondere C₁₀-C₃₀-Fettsäuresalz, ist und/oder daß das Salz der Mischung (C) einen Schmelzpunkt im Bereich von 100 °C bis 200 °C, insbesondere 120 °C bis 180 °C, vorzugsweise 130 °C bis 160 °C, aufweist und/oder daß der Schmelzpunkt des Salzes höchstens um 50 °C, insbesondere höchstens um 30 °C, vorzugsweise um 20 °C, von der Temperatur abweicht, bei welcher die Wärmeexpansion des Intumeszenzmittels (A) einsetzt und vorzugsweise unterhalb dieser Temperatur liegt.

11. Hybridmaterial nach einem der vorangehenden Ansprüche, **dadurch gekennzeichnet, daß** das Aluminiumsilikat und/oder Alumosilikat, insbesondere der Zeolith, und/ oder das Salz jeweils teilchenförmig vorliegen, insbesondere wobei das Aluminiumsilikat und/oder Alumosilikat einen mittleren Teilchendurchmesser D50 von höchstens 10 µm, insbesondere höchstens 5 µm, vorzugsweise höchstens 3 µm, und/oder einen mittleren Teilchendurchmesser D90 von höchstens 50 µm, insbesondere höchstens 20 µm, vorzugsweise höchstens 15 µm, aufweist und/oder insbesondere wobei das Salz Teilchengrößen im Bereich von 0,001 bis 2 mm, vorzugsweise 0,005 bis 1,5 mm, vorzugsweise 0,01 bis 1 mm, aufweist.

12. Hybridmaterial nach einem der vorangehenden Ansprüche, enthaltend weiterhin mindestens ein Fasermaterial (D), insbesondere Kunststoff-Fasermaterial, vorzugsweise in Form von Polyacrylnitrilfasern, insbesondere wobei das Fasermaterial in Mengen von 0,5 bis 5 Gew.-%, vorzugsweise 1 bis 2 Gew.-%, bezogen auf das Hybridmaterial, vorhanden ist.

13. Flamm- und/oder brandbeständiges, wärmeexpandierbares organisch-anorganisch basiertes Hybridmaterial, insbesondere Intumeszenzmasse, insbesondere nach einem der vorangehenden Ansprüche, enthaltend (A) Blähgraphit, insbesondere in Mengen von 10 bis 50 Gew.-%, insbesondere 15 bis 45 Gew.-%, vorzugsweise 20 bis 30 Gew.-%, bezogen auf das Hybridmaterial, vorzugsweise mit Teilchengrößen von mindestens 200 µm, vorzugsweise mindestens 300 µm, für 80 % der Blähgraphitteilchen;
(B) mindestens ein matrixbildendes, insbesondere eine Schaumstruktur bildendes Polymer, vorzugsweise ein Polyurethan, insbesondere in Mengen von 20 bis 90 Gew.-%, insbesondere 30 bis 80 Gew.-%, vorzugsweise 40 bis 70 Gew.-%, bezogen auf das Hybridmaterial;
(C) eine Mischung auf Basis mindestens eines Zeoliths einerseits und mindestens eines Alkali-, Erdalkali- oder Aluminiumsalzes einer organischen Säure, besonders bevorzugt Calciumstearat, andererseits, insbesondere in Mengen von 1 bis 30 Gew.-%, insbesondere 2 bis 20 Gew.-%, vorzugsweise 4 bis 18 Gew.-%, bezogen auf das Hybridmaterial, und/oder insbesondere mit einem gewichtsbezogenen Zeolith/Salz-Mengenverhältnis im Bereich von 0,1 : 1 bis 10: 1, insbesondere 0,5 : 1 bis 2 : 1, vorzugsweise 0,75: 1 bis 1,25 : 1, besonders bevorzugt etwa 1 : 1;
(D) gegebenenfalls mindestens ein Fasermaterial, insbesondere Kunststoff-Fasermaterial, vorzugsweise in Form von Polyacrylnitrilfasern, insbesondere in Mengen von 0,5 bis 5 Gew.-%, vorzugsweise 1 bis 2 Gew.-%, bezogen auf das Hybridmaterial.

14. Verwendung des flamm- und/oder brandbeständigen, wärmeexpandierbaren organisch-anorganisch basierten Hybridmaterials, insbesondere der Intumeszenzmasse, nach den vorangehenden Ansprüchen zur Ausrüstung von Hohlräumen, von Öffnungen, von Rohr- und Leitungssystemen, insbesondere Kabelkanälen, Kabelrohren, Kabelschächten, Lüftungskanälen, Lüftungsrohren, Lüftungsschächten oder dergleichen, von Türen, von Fenstern oder von Fugen.

15. Verwendung des flamm- und/oder brandbeständigen, wärmeexpandierbaren organisch-anorganisch basierten Hybridmaterials, insbesondere der Intumeszenzmasse, nach den vorangehenden Ansprüchen zum flamm- und/oder brandbeständigen Verschließen und/oder wenigstens partiellen Ausfüllen von Hohlräumen, von Öffnungen, von Rohr- und Leitungssystemen, insbesondere Kabelkanälen, Kabelrohren, Kabelschächten, Lüftungskanälen, Lüftungsrohren, Lüftungsschächten oder dergleichen, von Türen, von Fenstern oder von Fugen im Brandfall.
